# EUROPEAN PATENT APPLICATION

(11) **EP 3 553 955 A1**
(43) Date of publication of application: **16.10.2019**
(21) Application number: 16923550.4
(22) Date of filing: 06.12.2016
(51) Int. Cl.: H04B 1/38, F16M 11/40, F16M 11/04, F16M 13/04

(54) **FLEXIBLE ELECTRONIC DEVICE**

(71) Applicant: Shenzhen Royole Technologies Co., Ltd., Shenzhen, Guangdong 518172 (CN)
(72) Inventor: LIAO, Le, Shenzhen Guangdong 518052 (CN); XIA, Xinyuan, Shenzhen Guangdong 518052 (CN); CHEN, Songya, Shenzhen Guangdong 518052 (CN); YANG, Songling, Shenzhen Guangdong 518052 (CN)
(74) Representative: Mewburn Ellis LLP
(86) International application number: PCT/CN2016/108747
(87) International publication number: WO 2018/102997

(57) **Abstract**

A flexible device comprises a flexible screen and a supporting assembly for supporting the flexible screen. The supporting assembly comprises a plurality of moving members and connecting members each for movably connecting two adjacent moving members of the plurality of moving members. The adjacent moving members moving relatively to support the flexible screen in an unfolded state or a bent state. The flexible device can be transformed into different forms according to requirements, so as to adapt to application requirements of various shapes of flexible screen.

## Description

### TECHNICAL FIELD

This present disclosure relates to flexible electronic device, and in particular, to a flexible wearable electronic device.

### BACKGROUND

As people's attention to health is gradually increasing, more and more wearable smart devices are designed, such as smart watches, smart bracelets, smart running shoes, smart clothes, smart backpacks and so on. People use various sensors integrated in the smart device to monitor human body's data to maintain health.

Smart bracelet has become popular among wearable smart devices due to its small size and light weight. However, the shape of existing smart bracelet is basically fixed and cannot meet application requirements of more occasions.

### SUMMARY

The present disclosure provides a flexible electronic device which can meet the application requirements of different occasions.

A flexible electronic device, includes: a functional component and a deformation supporting assembly. The functional component is arranged an outer side of the deformation supporting assembly. An inner side of the deformation supporting assembly is used for attaching an external device when the flexible electronic device bends and deforms.

The deformation supporting assembly includes a plurality of rotating units. Adjacent rotating units of the plurality of rotating units are rotatably coupled with each other in sequence.

The deformation supporting assembly further includes at least one connecting member. Each of the at least one connecting member is rotatably coupled between two adjacent rotating units of the plurality of rotating units. And, at the outer side of the deformation supporting assembly, a surface area of each connecting member is larger than that of any one of the plurality of rotating units.

The deformation supporting assembly further includes two moving members. The two moving members are rotatably coupled to a first end and a last end of the plurality of rotating units. At the outside of the deformation supporting assembly, a surface area of the moving member is larger than a surface area of any one of the plurality of rotating units.

The deformation supporting assembly further comprises a plurality of damping fins. Each of the plurality of damping fins sandwiches between the connecting member and the two rotating units adjacent to the connecting member; or, between one rotating unit and at least one moving member, is configured for positioning when the flexible electronic device bends.

The damping fins is located between the rotating arm of one of the plurality of rotating units and the groove of a rotating seat of an adjacent rotating unit.

Each of the plurality of damping fins includes a base plate and a supporting seat extending outwardly from the base plate. The supporting seat includes a rotating arm and a rotating seat. The rotating arm sleeves with a rotating seat of a supporting seat of an adjacent rotating unit.

Each of the plurality of rotating units further includes bolt. The rotating arm defines a rotation hole. The rotating seat defines a groove. Two through holes are defined on two sides of the groove symmetrically. When the rotating arm sleeves with the rotating seat of the supporting seat of the adjacent rotating unit. The rotating arm is partly received in the groove of the rotating seat of the adjacent rotating unit. The bolt passes through the two through holes and the rotation hole.

Each of the plurality of rotating units includes two supporting seats. The two supporting seats are arranged on opposite sides of the base plate.

The rotation hole has a shape of a circle, an ellipse or a polygon having a plurality of corners. The bolt is slidably sleeved with the rotation hole. When the rotating unit is rotatably coupled to the adjacent rotating unit, an outer edge of the rotating seat abuts against an outer edge of the rotating seat of the adjacent rotating unit; and one end of the rotating arm abuts against an inner wall of the groove of the rotating seat of the adjacent rotating unit.

One end of the rotating seat away from the base plate is circular bead; and one end of the rotating arm abutting against the inner wall of the groove of the adjacent rotating seat is circular bead.

The flexible electronic device further includes an elastic plate, and the plurality of rotating units; the connecting member, and the moving member are attached to a same side of the elastic plate.

The functional component is a flexible touch screen; and the flexible touch screen is attached to the other side of the elastic plate.

The flexible electronic device further includes a flexible housing. The flexible housing includes a hollow chamber and a cover plate. The cover plate has a transparent region. The functional component and the deformation supporting assembly are received in the hollow chamber of the housing; and the flexible touch screen is configured corresponding to the transparent region of the cover plate.

The flexible electronic device further includes electronic components; the electronic components are received in the hollow chamber of the flexible housing.

The electronic components include a battery, a microphone, a circuit board, and a loudspeaker; the battery, the microphone, the circuit board, and the loudspeaker are located on one side of the moving member.

By using a deformable flexible component, the flexible electronic device may deform according to an occurring situation, thereby the flexible electronic device has different shapes to adapt to application needs for a variety of different scenarios.

### BRIEF DESCRIPTION OF THE ACCOMPANYING DRAWINGS

In order to illustrate the technical solutions in the embodiments of the present disclosure more clearly, the drawings to be used in the embodiments will be briefly described below. It is obvious that the drawings in the following description are only some embodiments of the present disclosure. Those skill in the art can also obtain other obvious deformation methods according to these drawings without exerting creative labor.
FIG. 1 is a schematic structural view of a flexible electronic device according to one embodiment of the present disclosure.
FIG. 2 is a schematic structural view of a deformation supporting assembly of the flexible electronic device of FIG. 1.
FIG. 3 is a partial exploded view of two rotating units of the deformation supporting assembly of FIG. 1.
FIG. 4 is a schematic structural view of a rotating unit of the deformation supporting assembly of FIGS. 1 and 2.
FIG. 5 is a partial structural view of rotating units of the deformation supporting assembly of FIG. 2 in a curved state.
FIG. 6 is a partial cross-sectional view of the rotating unit and the connecting member of the deformation supporting assembly in a plane state.
FIG. 7 is a second schematic structural view of a flexible electronic device according to one embodiment of the present disclosure.

### DETAILED DESCRIPTION OF ILLUSTRATED EMBODIMENTS

The technical solution in the embodiments of the present disclosure will be described clearly and completely hereinafter with reference to the accompanying drawings in the embodiments of the present disclosure.

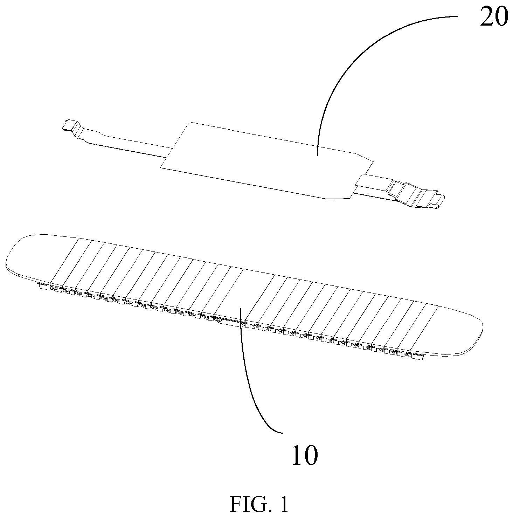

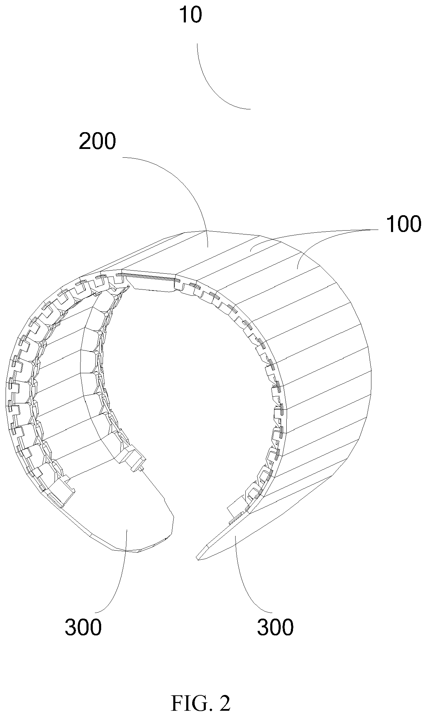

Referring to FIGS. 1 and 2, a flexible electronic device according to one embodiment of the present disclosure is illustrated. The flexible electronic device includes a functional component 20 and a deformation supporting assembly 10. The functional component 20 is arranged on an outer side of the deformation supporting assembly 10. An inner side of the deformation supporting assembly 10 is used for attaching an external device when the flexible electronic device bends and deforms.

The functional component 20 is determined by actual application or function of the flexible electronic device used by the user. When the flexible electronic device is used for displaying information, the functional component 20 is a component having a display function. When the flexible electronic device is used for wireless communication, the functional component 20 refers to a component having functions of sound collecting, playing, and wireless communication. When the flexible electronic device is used for data detection, the functional component 20 is a component including one or more kinds of sensors. When the flexible electronic device is used for playing music, the functional component 20 is a component including an audio decoding chip and a player. The functional component 20 can be determined by a practical application or a function of the flexible electronic device used by a user, or can be determined by an actual application and a function of the flexible electronic device used by the user. For example, the flexible electronic device can be used for displaying information, and can also be used for wireless communication, music playback, and data detection. The functional component 20 corresponds to a collection of one or more function assemblies 20.

The deformation supporting assembly 10 has a function of bending and deforming. In the present embodiment, the deformation that has occurred refers to changing from a plane state to a curved state. When in the plane state, the flexible electronic device is spread out wholly, thereby facilitating the user to use the functions of the flexible electronic device and perform man-machine operations. When in the curved state, the flexible electronic device wholly bends to form a wearable device, thereby facilitating the user to wear the flexible electronic device on the body. Of course, the deformation of the flexible electronic device can also be changed according to requirements, in order to meet the requirements of more application occasions. For example, switching from an arch-shape to a circular-shape, switching from a flat-shape to a wavy-shape, switching from a U-shape to an S-shape, and so on.

When the deformation supporting assembly 10 is in the plane state, the outer side surface of the deformation supporting assembly 10 is a flat surface. When the state of the deformation supporting 10 is changed from the plane state to the curved state, the outer side surface of the deformation supporting assembly 10 changes to be a curved surface; the inner side surface of the deformation supporting assembly 10 gathers towards a curved direction; and the gathered inner side forms an accommodating space. Two ends of the deformation supporting assembly 10 cooperating with each other serves as clamping functions. The flexible electronic device can be mounted or attached to the external device by utilizing the accommodating space, for example, the flexible electronic device can be attached to the user's wrist, so that the flexible electronic device is worn on the user. When the deformation supporting assembly 10 is in the plane state, the flexible electronic device can be removed from the user's wrist. When the deformation supporting assembly 10 bends and the two ends are in contact with each other, the flexible electronic device forms a closed ring.

Referring to FIG. 2 specifically, the deformation supporting assembly 10 includes a plurality of rotating units 100. The adjacent rotating units 100 rotatably couples with each other in sequence, and the plurality of rotating units 100 selectively couple to each other to provide a function of bending deformation of the deformation supporting assembly 10.

In this embodiment, the deformation supporting assembly 10 further includes a connecting member 200; the connecting member 200 is rotatably coupled between two rotating units 100; at the outer side of the deformation supporting assembly 10, a surface area of the connecting member 200 is greater than a surface area of any one of the plurality of rotating units 100. In other embodiments, the deformation supporting assembly 10 may have no connecting member 200 or may have multiple connecting members 200. When there is no connecting member 200, the deformation of the deformation supporting assembly 10 is solely determined by the plurality of rotating units 100, and the deformation state of the flexible electronic device is adjustable. Additionally, when a connecting member 200 having a large spread plane is configured among the plurality of rotating units 100, the functional component 20 is more easily arranged on the outer side of the deformation supporting assembly 10, thereby facilitating operation and using of the user.

The deformation supporting assembly 10 further includes two moving members 300. The two moving members 300 rotatably couple to a first end and a last end of the plurality of rotating units 100. At the outer side of the deformation supporting assembly 10, the surface area of the moving member 300 is larger than the surface area of any one of the plurality of rotating units 100. The moving members 300 are set to facilitate for converting the flexible electronic device from the plane state to the curved state or from the curved state to the plane state. Furthermore, the moving member 300 is configured at two ends of the deformation supporting assembly 10, and the surface area of the moving member 300 is larger than the surface area of any one of the plurality of rotating units 100, thereby preventing the flexible electronic device from coming off the external device when it attaches to the external device.

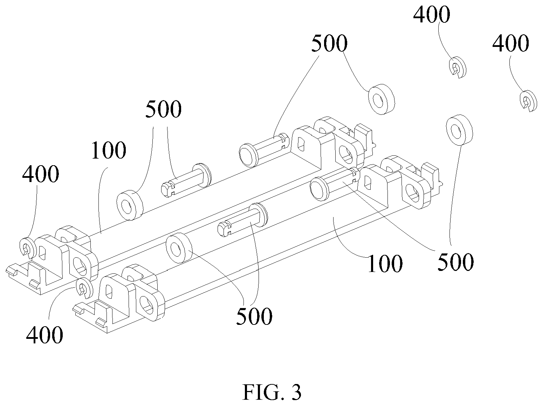

Referring to FIG. 3, the deformation supporting assembly 10 includes a plurality of damping fins 400. Each damping fin 400 sandwiches between adjacent rotating units 100 for positioning of the adjacent rotating units 100 referring to each other. The damping fins 400 are used for positioning the rotating units 100 when the plurality of rotating units 100 rotate, thus making the deformation supporting assembly 10 in the curved sate, and maintaining the curved state of the deformation supporting assembly 10.

In one embodiment, as the deformation supporting assembly 10 includes the connecting member 200 and the two moving members 300, and the connecting member 200 and the two moving members 300 are both rotatably coupled to the rotating units 100, therefore, the damping fins 400 may be sandwiched between the rotating units 100 and the connecting member 200, or between the rotating units 100 and the two moving members 300, for positioning the rotating units 100, the connecting member 200 and the moving member 300 when the flexible electronic device is bending and deforming. The bendability of the flexible electronic device can be controlled by the arranged positions, the material and the quantity of the damping fins 400. When the flexible electronic device is easy to bent, the corresponding flexible electronic device is less likely to maintain the curved state. When the flexible electronic device is hard to bent, it is required the user to use a larger force to bend it, accordingly the flexible electronic device is easier to maintain the curved state after bending. The damping fins 400 are arranged to facilitate the user to control the bendability of the flexible electronic device according to the actual using scenario.

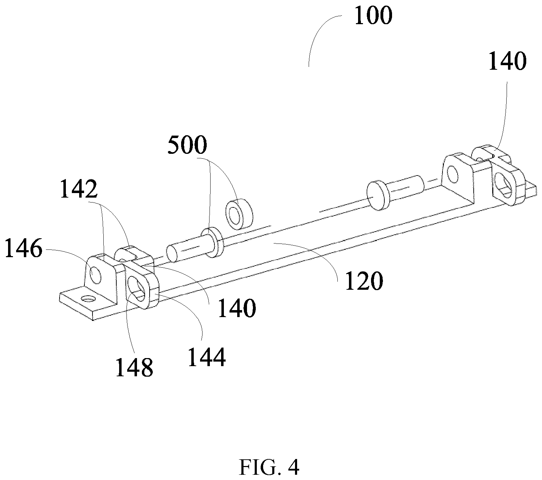

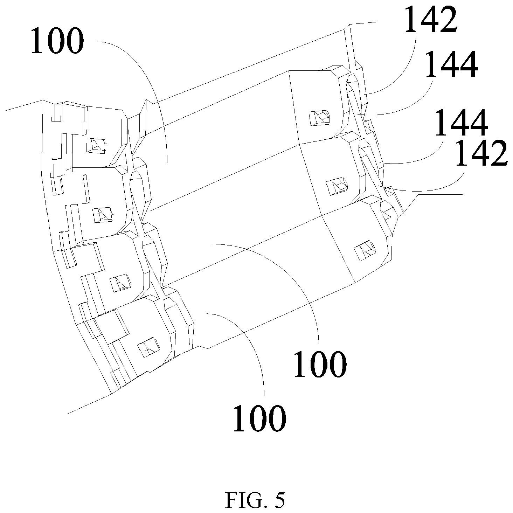

Referring to FIG. 4 and FIG. 5 simultaneously, in this embodiment, each of the plurality of rotating units 100 includes a base plate 120 and a supporting seat 140 extending outwardly from the base plate 120. The supporting seat 140 includes a rotating arm 144 and a rotating seat 142. The rotating arm 144 sleeves with the rotating seat 142 of the supporting seat 140 of the adjacent rotating unit 100. The outer edge of the rotating seat 142 of each supporting seat 140 abuts against the supporting seat 140 of the adjacent rotating unit 100. The base plates 120 of the plurality of rotating units 100 couple together to form a splicing surface. The supporting seat 140 of each rotating unit 100 are arranged in a row. When the rotating arm 144 couples to the rotating seat 142 of the supporting seat 140 of another rotating unit 100, the rotating arms 144 and the rotating seats 142 of supporting seats 140 of the plurality of rotating units 100 are collinear.

In this embodiment, each of the plurality of rotating units 100 includes two supporting seats 140 vertically extending upwardly from the base plate 120 and coupling to the base plate 120. The two supporting seats 140 are symmetrically arranged on the base plate 120, and each of the two supporting seats 140 includes a rotating arm 144 and a rotating seat 142. The two supporting seats 140 of each of the plurality of rotating units 100 are arranged in a row. When the rotating arm 144 sleeves with the rotating seat 142 of the supporting seat 140 of the adjacent rotating unit 100, the rotating arm 144 and the rotating seat 142 of the plurality of supporting seats 140 of the rotating units 100 are collinear. The two supporting seats are provided to improve a connection strength and stability when the plurality of rotating units 100 rotate.

Referring to FIG. 3, each rotating unit 100 further includes bolt 500. The rotating arm 144 defines a rotation hole 148. The rotating seat 142 defines a groove. Two through holes 146 are symmetrically defined on both inner side walls of the groove. When the rotating arm 144 sleeves with the rotating seat 142 of the supporting seat 140 of the adjacent rotating unit 100, the rotating arm 144 is partially received in the groove of the rotating seat 142 of the adjacent rotating unit, and the bolt 500 passes through the through holes 146 and the rotation hole 148. Each damping fin 400 is arranged between the rotating arm 144 and the groove of the rotating seat 142 of the adjacent rotating unit. Setting the damping fins 400 allows the user to adjust the bendability of the flexible electronic device according to the actual using scenario.

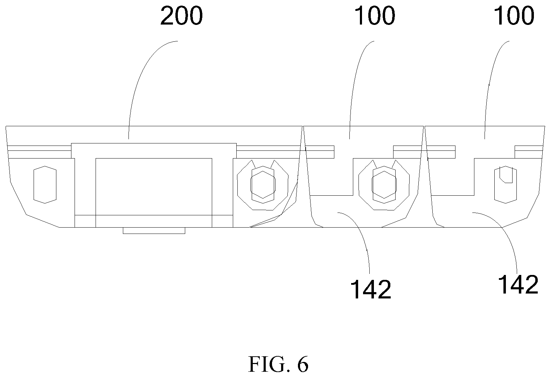

The rotation hole 148 has a shape of a circle, an ellipse or a polygon having a plurality of corners. Referring to FIG. 3, FIG. 4 and FIG. 6, in this embodiment, the rotation hole 148 has a shape of ellipse. The bolt 500 slidably couples to the rotation hole 148. When one of the plurality of rotating units 100 rotatably couples to the adjacent rotating unit, the outer edge of the rotating seat 142 abuts against the outer edge of rotating seat 142 of the adjacent rotating unit 100, and one end of the rotating arm 144 abuts against an inner wall of the groove of the rotating seat 142 of the adjacent rotating unit. One end of the rotating seat 142 away from the base plate 120 is circular bead. The one end of the rotating arm 144 abutting against the inner wall of the groove of the adjacent rotating seat 142 is circular bead. When the rotation hole 148 has the shape of ellipse, the rotating arm 144 has a moving space when rotating in the rotating seat 142, so that the rotating arm 144 can move in a length direction of the rotation hole 148 in the moving space while rotating. With the circular bead of the outer edge of the rotating seat 142, the flexible electronic device is more compliant in bending.

The rotation holes 148 are provided with different lengths and the circular bead of the outer edge of the rotating seats 142 are provided with different curvatures, therefore a range of rotating angle of two adjacent rotating units 100 can be adjusted. In this embodiment, the rotating angle between the two adjacent rotating units 100 is limited to 1 degree or more and 5 degrees or less.

The connecting member 200 and the moving members 300 are also provided with corresponding rotation structures rotatably coupled to the rotating arms 144 and the rotating seats 142 of the plurality of rotating units 100. In this embodiment, the rotation structures of the connecting member 200 and the moving members 300 are the same as the rotating arms 144 and the rotating seats 142 of the plurality of rotating units 100. When the rotation structure of the connecting member 200 and the moving members 300 comprises a rotating arm, after the rotation structures of the connecting member 200 rotatably couple to the plurality of rotating units 100, the rotating arms 144 of the plurality of rotating units 100 located on the first end or the last end are coupled rotatably, and the rotation structure of the connecting member 200 and the moving member 300, and the rotating arms 144 and the rotating seats 142 of the plurality of rotating units 100 are also directly set to the damping fins 400.

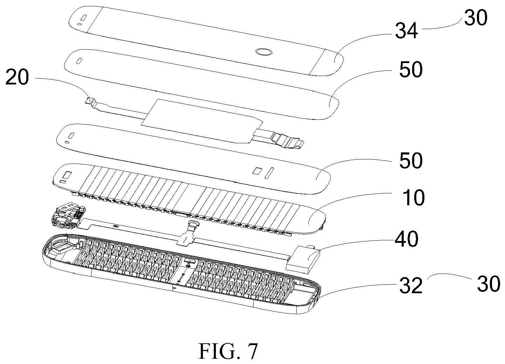

Referring to FIG. 7, the deformation supporting assembly 10 further includes an elastic plate 50. The plurality of rotating units 100, the connecting member 200, and the moving members 300 attach to a same side of the elastic plate 50. The elastic plate 50 is provided to enhance a solidity of the deformation supporting assembly 10, adjust a bendability of the deformation supporting assembly 10, and facilitate an installation and placement of the functional component 20.

In this embodiment, the functional component 20 is a flexible touch screen, and the flexible screen is attached to the other side of the elastic plate 50. In addition, the functional components are not limited to the flexible touch screen, and may also include other kinds of functional components according to different requirements, such as other types of functional components 20 like indicating screen, functional sensor, loudspeaker, microphone, and so on. Other types of functional components 20 can be hard functional component 20 with various areas like electronic ink screens, LED light panels, etc., which can be attached to a top surface of the supporting plate 34. The functional sensor may include a body temperature sensor, a temperature sensor, a speed sensor, a gravity sensor, a height sensor, an angular velocity sensor, an acceleration sensor, a barometric pressure sensor, a heart rate sensor, a pulse sensor, a sweat sensor, a light sensor, a myoelectric sensor, etc., which may be set at various positions of the flexible electronic device according to different purpose of use.

Referring to FIG. 8, the flexible electronic device further includes a flexible housing 30. The flexible housing 30 includes a hollow chamber 32 and a cover plate 34. The cover plate 34 has a transparent region. The functional component 20 and the deformation supporting assembly 10 are received in the hollow chamber of the flexible housing 30. The flexible touch screen 20 is configured corresponding to the transparent region. The flexible electronic device further includes electronic components 40 that are received in the hollow chamber of the flexible housing 30. The electronic components 40 include a battery, a microphone, a circuit board, and a loudspeaker. The electronic components 40 are arranged on one side of the moving member 300.

In view of the fact that the electronic components 40 such as battery are not resistant to bending, in order to protect these electronic components 40, the electronic components 40 are arranged on one side of the moving member 300, which can effectively save an internal space of the flexible electronic device, making the flexible electronic device thinner and lighter.

It should be noted that the above embodiments are only used to illustrate the technical solutions of the present disclosure, and are not intended to be limiting; although the present disclosure has been described in detail with reference to the foregoing embodiments, those of ordinary skilled in the art should understand the scope of the protection is not limited thereto, and any changes or substitutions that can be easily conceived within the scope of the present disclosure are intended to be included within the scope of the present disclosure. Therefore, the scope of protection of the present disclosure should be determined by the scope of the claims.

## Claims

1. A flexible electronic device, comprising: a functional component and a deformation supporting assembly, the functional component being arranged on an outer side of the deformation supporting assembly, and an inner side of the deformation supporting assembly being used for attaching to an external device when the flexible electronic device bends and deforms.

2. The flexible electronic device according to claim 1, wherein, the deformation supporting assembly comprises a plurality of rotating units; adjacent rotating units of the plurality of rotating units are rotatably coupled with each other in sequence.

3. The flexible electronic device according to claim 2, wherein, the deformation supporting assembly further comprises at least one connecting member; each of the at least one connecting member is rotatably coupled between two adjacent rotating units of the plurality of rotating units; and, at the outer side of the deformation supporting assembly, a surface area of eachconnecting member is larger than that of any one of the plurality of rotating units.

4. The flexible electronic device according to claim 3, wherein, the deformation supporting assembly further comprises two moving members; the two moving members rotatably couples to a first end and a last end of the plurality of rotating units; at the outer side of the deformation supporting assembly, a surface area of each of the two moving members is larger than that of any one of the plurality of rotating units.

5. The flexible electronic device according to claim 4, wherein, the deformation supporting assembly further comprises a plurality of damping fins; each of the plurality of damping fins sandwiches between the connecting member and the two rotating units adjacent to the connecting member; or, between one rotating unit and at least one moving member, is configured for positioning when the flexible electronic device bends.

6. The flexible electronic device according to claim 5, wherein, the damping pin is located between a rotating arm of one of the plurality of rotating units and a groove of a rotating seat of an adjacent rotating unit.

7. The flexible electronic device according to any one of claims 2 to 6, wherein each of the plurality of rotating units comprises a base plate and a supporting seat extending outwardly from the base plate; the supporting seat comprises a rotating arm and a rotating seat; the rotating arm sleeves with a rotating seat of a supporting seat of an adjacent rotating unit.

8. The flexible electronic device according to claim 7, wherein, each of the plurality of rotating units further comprises bolt; the rotating arm defines a rotation hole; the rotating seat defines a groove; two through holes are defined on two sides of the groove symmetrically; when the rotating arm sleeves with the rotating seat of the supporting seat of the adjacent rotating unit, the rotating arm is partly received in the groove of the rotating seat of the adjacent rotating unit, and the bolt passes through the two through holes and the rotation hole.

9. The flexible electronic device according to claim 8, wherein, each of the plurality of rotating units comprises a base plate and two supporting seats; the two supporting seats are arranged on opposite sides of the base plate.

10. The flexible electronic device according to claim 8, wherein, the rotation hole has a shape of a circle, an ellipse or a polygon having a plurality of corners; the bolt is slidably sleeved with the rotation hole; when the rotating unit is rotatably coupled to the adjacent rotating unit, an outer edge of the rotating seat abuts against an outer edge of the rotating seat of the adjacent rotating unit, and one end of the rotating arm abuts against an inner wall of the groove of the rotating seat of the adjacent rotating unit.

11. The flexible electronic device according to claim 10, wherein, one end of the rotating seat away from the base plate is circular bead, and one end of the rotating arm abutting against the inner wall of the groove of the adjacent rotating seat is circular bead.

12. The flexible electronic device according to claim 11, wherein, the flexible electronic device further comprises an elastic plate; and the plurality of rotating units, the connecting member, and the moving members are attached to a same side of the elastic plate.

13. The flexible electronic device according to claim 12, wherein, the functional component is a flexible touch screen; and the flexible touch screen is attached to the other side of the elastic plate.

14. The flexible electronic device according to claim 13, wherein, the flexible electronic device further comprises a flexible housing; the flexible housing comprises a hollow chamber and a cover plate; the cover plate has a transparent region; the functional component and the deformation supporting assembly are received in the hollow chamber of the flexible housing; and the flexible touch screen is configured corresponding to the transparent region of the cover plate.

15. The flexible electronic device according to claim 14, wherein, the flexible electronic device further comprises electronic components; the electronic components are received in the hollow chamber of the flexible housing.

16. The flexible electronic device according to claim 15, wherein, the electronic components comprise a battery, a microphone, a circuit board, and a loudspeaker; the battery, the microphone, the circuit board, and the loudspeaker are located on one side of the moving member.
